# EUROPEAN PATENT SPECIFICATION

(11) **EP 4 445 712 B1**
(45) Date of publication and mention of the grant of the patent: **15.04.2026**
(21) Application number: 24150553.6
(22) Date of filing: 05.01.2024
(51) Int. Cl.: A01D 34/00, G05D 1/639, G05D 1/24, G05D 1/86, G05D 1/00, A01D 101/00, G05D 105/15, G05D 107/20, G05D 109/10, G05D 111/50

(54) **TRACKING SYSTEM FOR A VEHICLE**
ORTUNGSSSYSTEM FÜR EIN FAHRZEUG
SYSTÈME DE SUIVI POUR UN VÉHICULE

(30) Priority: 10.01.2023 US 202363438098 P
(43) Date of publication of application: 16.10.2024
(73) Proprietor: Techtronic Cordless GP, Anderson, SC 29621 (US)
(72) Inventor: PETERS II, Frank Allen, Anderson, 29621 (US); CHAPMAN, Seth Harmon, Anderson, 29621 (US); FELDKAMP, Jonathan, Anderson, 29621 (US)
(74) Representative: Zimmermann & Partner Patentanwälte mbB

(56) References cited:
- CN-A- 105 988 466
- CN-U- 217 564 154
- DE-U1- 202018 100 838

## Description

### CROSS-REFERENCE TO RELATED APPLICATIONS

The present application claims priority to U.S. Provisional Patent Application Serial No. 63/438,098 filed on January 10, 2023.

### FIELD

The present invention relates to vehicles, and more particularly to motion tracking systems for lawn maintenance devices.

### BACKGROUND

Lawn maintenance devices allow a user to more easily maintain an environmental space associated with a lawn. For example, lawnmowers are generally utilized to cut grass. Lawnmowers include walk-behind lawnmowers, riding lawnmowers, standing mowers, and robotic lawnmowers. Lawnmowers generally include a walking element, such as one or more wheels, that allow the lawnmower to move over an underlying ground surface. In some instances, at least one of the walking elements can be powered. Powered walking elements are typically driven by one or more onboard power sources, such as one or more motors and/or engines. DE 20 2018 100838 U1 discloses a lawn mower comprising magnetic triggering elements which rotate with the driven roller. A Hall sensor is utilized to detect a change in position of the magnetic triggering elements and output a sine-like sensor signal. A processor counts the second square wave at a preset time. By comparing the count of the second square wave to a preset count value, a rotational state of the driven roller is determined to judge whether the self-propelled device is carrying out a normal movement.

Improved motion tracking systems and associated components and methods are desired in the art. In particular, motion tracking systems that allow for better control of a lawnmower or other type of lawn maintenance device would be advantageous.

### BRIEF DESCRIPTION

In accordance with the present disclosure, a lawn maintenance device is provided. The lawn maintenance device includes a frame; a wheel supporting the frame, wherein the wheel comprises: a body defining a central axis about which the body is rotatable; and a detectable element radially offset from the central axis; a detector that detects a relative position of the detectable element; and control circuitry that receives information from the detector and determines a position of the wheel based on the received information, the information associated with the detected relative position of the detectable element, wherein the determined position includes a rotational position of the body, as measured about the central axis, and an angular orientation of the body, as measured about a transverse axis normal to the central axis.

In accordance with an aspect not explicitly claimed, but considered useful for understanding the invention, a motion tracking system is provided. The motion tracking system includes a wheel configured to be coupled to the lawn maintenance device, the wheel comprising: a body defining a central axis; and a detectable element radially offset from the central axis; a detector configured to be coupled to the lawn maintenance device at a location spaced apart from the wheel, wherein the detector detects spatial information associated with the detectable element; and control circuitry in communication with the detector, wherein the control circuitry receives the spatial information from the detector and determines a position of the wheel relative to the detector based on the received spatial information.

In accordance with an aspect not explicitly claimed, but considered useful for understanding the invention, a method of controlling a lawn maintenance device is included. The method includes receiving, at a processor of the lawn maintenance device, information from a motion tracking system of the lawn maintenance device, the information associated with a detected position of a detectable element coupled to a wheel of the lawn maintenance device, the wheel rotatable about a central axis; and processing, at the processor of the lawn maintenance device, the received information to determine a position of the wheel, the position including a rotational position of the wheel, as measured about the central axis.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

The detailed description that follows makes reference to the appended figures, in which:
FIG. 1 is a partial cross-sectional view of a lawn maintenance device in accordance with embodiments of the present disclosure;
FIG. 2 is a bottom view of the lawn maintenance device in accordance with embodiments of the present disclosure;
FIG. 3 is a schematic view of a wheel including detectable elements in range of a detector of a motion tracking system of the lawn maintenance device in accordance with embodiments of the present disclosure when the wheel is in a first rotational orientation;
FIG. 4 is a schematic view of a wheel including detectable elements in range of a detector of a motion tracking system of the lawn maintenance device in accordance with embodiments of the present disclosure when the wheel is in a second rotational orientation;
FIG. 5 is a graph of a signal detected by the detector during rotational movement of the wheel of the lawn maintenance device in accordance with embodiments of the present disclosure;
FIG. 6 is a schematic view of a wheel and motion tracking system of the lawn maintenance device in accordance with embodiments of the present disclosure;
FIG. 7 is a schematic view of a wheel and motion tracking system of the lawn maintenance device in accordance with embodiments of the present disclosure;
FIG. 8 is a graph of a multi-dimensional detection signal from the detector as seen over time in accordance with embodiments of the present disclosure; and
FIG. 9 is a schematic of a motion control system for a lawn maintenance device in accordance with embodiments of the present disclosure.

### DETAILED DESCRIPTION

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Approximating language, as used herein throughout the specification and claims, is applied to modify any quantitative representation that could permissibly vary without resulting in a change in the basic function to which it is related. Accordingly, a value modified by a term or terms, such as "about," "generally," "approximately," and "substantially," are not to be limited to the precise value specified. In at least some instances, the approximating language may correspond to the precision of an instrument for measuring the value, or the precision of the methods or machines for constructing or manufacturing the components or systems. For example, the approximating language may refer to being within a ±10 percent margin. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, embodiments in accordance with the present disclosure are directed to lawn maintenance devices, such as lawnmowers, tractors, powered wheelbarrows, skid steers, and the like. In particular, the embodiments described herein may be used to control autonomous or semi-autonomous lawn maintenance devices.

The lawn maintenance device can include control circuitry that operates and/or controls one or more components of the lawn maintenance device, such as motors, batteries, user interfaces, or the like. In an embodiment, the control circuitry includes, or is connected to, a motion tracking system that detects positional information associated with movement of the lawn maintenance device. The control circuitry can determine an action or corrective action in view of the detected positional information. The positional information can be associated with a walking element of the lawn maintenance device. The walking element can include, for example, a rotatable wheel supporting a frame of the lawn maintenance device. The motion tracking system can detect positional information associated with the wheel. The positional information includes a rotational (relative or absolute) position of the wheel, as measured about a central axis of the wheel, an angular orientation of the wheel, as measured about a transverse axis normal to the central axis, and may further include a speed of the wheel, an acceleration of the wheel, or the like.

According to the invention, the wheel includes a detectable element. The wheel may also include a plurality of detectable elements.
The detectable element(s), individually or together,
provide a detectable signature that is rotationally keyed to the wheel such that a detector can determine a relative position of the wheel in view of the keyed signature provided (e.g. generated) by the detectable element(s). In some instances, the detectable element(s) can be formed by localized regions of a continuous single-piece body, each of the localized regions having a detectable signature that is spaced apart from an adjacent localized region by a portion of the single-piece body devoid of a (or with reduced or otherwise different) detectable signature. In another embodiment, each of the detectable elements can be formed from a discrete, separate component that is not attached to any of the other detectable element(s).

In an embodiment, the detectable element(s) can be spaced apart from the central axis of the wheel in the radial direction (i.e., displaced towards a tread of the wheel). Where multiple detectable elements are used, the detectable elements can be circumferentially spaced apart from one another about the central axis. For example, the detectable elements can be equally spaced apart from one another in the circumferential direction.

As the wheel rotates, the position of the detectable element(s) can be detected by the detector. More particularly, the detector can detect the signature provided by the detectable element(s). The detector can be disposed in, on, or at the frame or a body (e.g., a faring) of the lawn maintenance device. The detector can be statically mounted relative to the frame such that the detector detects movement of the detectable element(s) relative to the frame. The motion tracking system can include a controller in communication with the detector. In an embodiment, the controller may be integral with control circuitry of the lawn maintenance device (i.e., the controller may be part of primary control circuitry of the lawn maintenance device). For instance, the controller may include a subunit of the control circuitry. The controller may share, or be at least partially disposed on, a printed circuit board (PCB) associated with the control circuitry for the lawn maintenance device. **In** another embodiment, the controller can be a discrete (separate) controller in communication with control circuitry of the lawn maintenance device. For instance, the motion tracking system (and controller) can be retrofit on an existing lawn maintenance device and the controller can interface with the control circuitry of the lawn maintenance device.

The information detected by the detector (e.g., the detected signature) can be communicated to the controller through a wired or wireless communication protocol. The controller can analyze and/or process the information received from the detector to determine the position of the wheel relative to the detector or another portion of the lawn maintenance device. This positional information can be used to inform control loops and/or processes associated with the lawn maintenance device. For example, the controller may be configured to determine a status of the lawn maintenance device in view of the determined position of the wheel. **In** one example scenario, where control circuitry of the lawn maintenance device expects the lawn maintenance device to be travelling at a certain speed, e.g., in view of motor control instructions, but the controller determines the wheel is moving at a different speed, the control circuitry (and/or controller) can determine that the lawn maintenance device is subject to an adverse event, e.g., the lawn maintenance device is stuck, broken, or the wheels of the lawn maintenance device are slipping (e.g., due to wet conditions, a worn tread, oil or other lubricants disposed on the tread, or the like). **In** some instances, the control circuitry can record information associated with the adverse event and/or the positional information associated with the wheel. The recorded information can be used by a machine learning computing system (local or remote from the lawn maintenance device), e.g., to improve functionality and/or controls associated with operation of the lawn maintenance device. **In** addition, or alternatively, the recorded information can be accessed by a user, a technician (such as a manufacturer for servicing and/or repairs), or the like.

Control circuitry of the lawn maintenance device can inform control decisions in view of the positional information detected by the detector and/or the determined status of the lawn maintenance device. For example, by detecting and tracking movement of the walking system, movement patterns of the lawn maintenance device can be refined and tailored, e.g., based on environmental conditions. For instance, wet conditions may be detectable in view of slipping of the wheel as detected by unexpected positional information detected by the motion tracking system. Additionally, closed loop controls like traction control can be implemented systemically or on an individual wheel-by-wheel basis to enhance riding and operational handling.

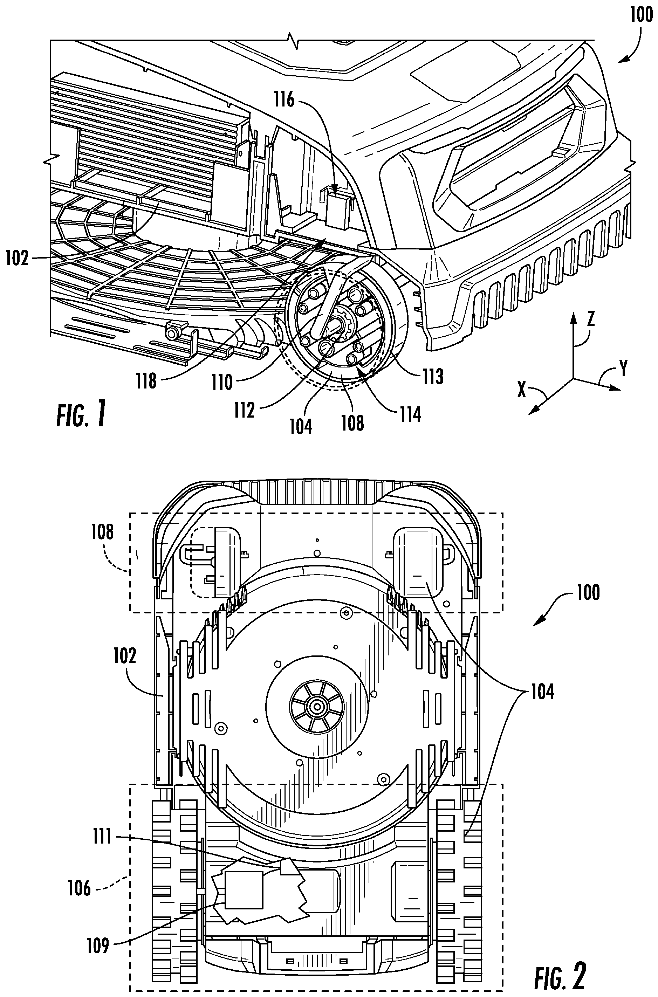

Referring now to the drawings, FIGS. 1 and 2 illustrate a lawnmower 100 in accordance with an example embodiment of the present disclosure. The lawnmower 100 can be a robotic lawnmower configured to operate without active interaction of a human operator. In this regard, the depicted lawnmower 100 is capable of autonomously performing mowing operations, e.g., navigating a work area, performing functional operations (e.g., mowing) within the work area, detecting conditions within the work area, detecting internal conditions associated with the lawnmower (e.g., remaining charge capacity of an onboard power storage device), or the like. Other exemplary lawnmowers 100 can include walk-behind lawnmowers, riding lawnmowers, and standing mowers. It should be understood that while the following description is provided in reference to robotic lawnmowers, embodiments described herein are not intended to be limited to robotic lawnmowers, and may include walk-behind lawnmowers, riding lawnmowers, standing mowers, other lawn maintenance vehicles with walking elements, like tractors, powered wheelbarrows, skid steers, and the like - or even non-lawn maintenance vehicles.

The lawnmower 100 generally includes a frame 102 supported by a walking element, depicted in FIG. 2 as a plurality of wheels 104. In another embodiment, the wheels 104 may include another type of walking element, such as a moveable track supported by one or more idler wheels and/or sprockets. In the embodiment illustrated in FIG. 2, the wheels 104 include two rear wheels 106 and two front wheels 108. The two rear wheels 106 can be driven, e.g., by one or more onboard motors or engines 109. In some implementations, the two rear wheels 106 are driven by a common motor or engine, e.g., through a gearbox. In other implementations, the two rear wheels 106 are each driven by a separate motor. In some implementations, the lawnmower 100 is an electric vehicle (EV) and includes an onboard power storage device, e.g., one or more batteries 111 that store electric charge that selectively power the motors driving the rear wheel(s) 106. The batteries 111 may also provide power to one or more operational components of the lawnmower 100, such as a cutting implement (e.g., one or more rotatable blades), an obstacle detection component, a wireless communication component, lights, hydraulics, pneumatics, other lawn maintenance tools and components, or any combination thereof.

The two front wheels 108 can be nonpowered. In this regard, the front wheels 108 can support the frame 102 of the lawnmower 100 and permit movement of the lawnmower 100 over an underlying ground surface without imparting directional control thereto. In other embodiments, one or both of the front wheels 108 can be powered in addition to the rear wheels 106. In the depicted embodiment, the two front wheels 108 are each caster wheels rotatable about a Z-axis. The front wheels 108 can each be coupled to the lawnmower 100 through a rotatable interface, such as a bracket 110. Each bracket 110 can be moveably coupled to the lawnmower 100 and can rotate about 360° of motion.

In an embodiment, each bracket 110 can include a wheel engaging portion with a bearing 112 that rotatably supports one of the front wheels 108. By way of non-limiting example, the bearing 112 can be a roller bearing, a ball bearing, a needle bearing, a fluid bearing, a journal bearing, a taper bearing, or the like. Reference hereinafter is made to a single front wheel 108, however it should be understood that in one or more embodiments both front wheels 108 can include any number of features or characteristics as described below. Moreover, in certain instances these features or characteristics can be used at one or both of the rear wheels 106. Additionally, it should be understood that the terms "front" and "rear" are not intended to be construed as limiting. For example, in an embodiment the lawnmower 100 can be inverted in layout to include powered front wheels and nonpowered rear wheels. In this embodiment, the rear wheels can take the form of caster wheels which are rotatable about the Z-axis. Additionally, the lawnmower 100 can include more or less than the number of wheels 108 depicted in FIGS. 1 and 2 arranged in any combination of relative positions. Yet other configurations are contemplated herein.

Referring to FIG. 1, the front wheel 108 includes a body 113 having one or more detectable elements 114, such as at least two detectable elements 114, at least three detectable elements 114, at least four detectable elements 114, or at least five detectable elements 114. The detectable elements 114 can be spaced apart from one another about a circumferential direction of the front wheel 108. In an embodiment, the detectable elements 114 can be equally spaced apart from one another, i.e., all of the detectable elements 114 can be angularly offset from adjacent detectable elements 114 about a central axis of the wheel 108 by the same relative angular displacement. For example, front wheels 108 including four detectable elements 114 can have an angular displacement of 90° between adjacent detectable elements 114. Similarly, front wheels 108 including three detectable elements 114 can have an angular displacement of 120° between adjacent detectable elements 114.

In some instances, the detectable elements 114 can be coupled together. In an embodiment, the detectable elements 114 can be coupled together by a separate, discrete element, such as a circular ring. The detectable elements 114 can be coupled to the circular ring, e.g., permanently or temporarily attached to the circular ring. In another embodiment, the circular ring can be unitary with the detectable elements 114.

In an embodiment, the detectable elements 114 can be equally displaced from the central axis of the wheel 108 in a radial direction. For instance, each one of the detectable elements 114 can be disposed a distance X from the central axis of the wheel 108. In another embodiment, the detectable elements 114 can be variably spaced apart from the central axis in the radial direction. For instance, a first detectable element 114 can be disposed a first distance X₁ from the central axis and a second detectable element 114 can be disposed a second distance X₂ from the central axis (not illustrated). The first and second distances X₁ and X₂ can be different from one another. In an embodiment, the detectable elements 114 can be grouped into sets, such as a first set and a second set, with each set being spaced apart from the central axis by a prescribed distance. Detectable elements 114 of the first and second sets can be alternated with one another, i.e., two adjacent detectable elements 114 of the first set can be spaced apart from one another by a detectable element 114 of the second set. Any number of sets can be utilized to achieve better detection results as described herein.

The detectable elements 114 can be at least partially disposed within the front wheel 108. In an embodiment, the detectable elements 114 are disposed radially inside of an outer perimeter of the front wheel 108. For example, the detectable elements 114 can be disposed radially inside of an outer tread surface of the front wheel 108. In an embodiment, the detectable elements 114 are disposed between lateral sidewalls of the wheel 108. In an embodiment, the detectable elements 114 can be disposed within one or more receiving areas of the front wheel 108. The receiving area(s) can be open for access (e.g., allowing a user access to the detectable elements 114) or sealed to prevent ingress of contaminants during operation. In certain instances, the front wheel 108 can be retrofit with the detectable elements 114. For example, the front wheel 108 can include a multi-piece construction whereby the front wheel 108 can be opened to allow access to the receiving area(s). The detectable elements 114 can be installed in the existing receiving area(s) within the front wheel 108 and then may be resealed.

The detectable elements 114 generate a detectable signal. One or more of the detectable elements 114, such as all of the detectable elements 114, can have a shape which provides a multi-dimensional detectable signal. For example, one or more of the detectable elements 114 can have an elongated shape, such as a cylindrical body, with a length extending parallel to the rotational (central) axis of the front wheel 108. The elongated shape can allow for a detectable signature (e.g., a magnetic field) which is not uniformly distributed in the X-, Y-, Z- field. As the detectable element 114 moves, the shape of the detectable signature remains constant (i.e., the same), but the orientation of the detectable signature changes. Thus, relative movement of the detectable element(s) 114 can be determined in a multi-dimensional X-, Y-, Z-field by tracking the orientation of the detectable signature as described in greater detail below.

The detectable elements 114 can each be detectable by a detector 116. The detectable elements 114 and detector 116 can together define a motion tracking system. The motion tracking system can be contactless, such that the detectable elements 114 and detector 116 do not touch one another to perform motion detection. The detector 116 can be coupled to the frame 102 (or another suitable portion of the lawnmower 100) and detect the presence of the detectable elements 114. For instance, the detector 116 can be disposed at, on, or in the frame 102 at a location adjacent to, or in, a wheel well 118 of the lawnmower 100. In an embodiment, the detectable elements 114 are magnets and the detector 116 is a magnetometer configured to detect proximity of the magnets. In a more particular embodiment, the detector 116 is a multi-axis detector, such as a 3-axis magnetometer. In another embodiment, the detector 116 can be another type of detecting element, such as an RFID reader which detects an RFID signal emitted by detectable elements 114. In yet another embodiment, the detector 116 can include a thermal detector which detects a thermal signature from a heat generating detectable element 114. In yet another embodiment, the detector 116 can be a visual detector which detects a visual detectable element 114. Yet other detector types and detectable elements are contemplated herein.

The detectable signal provided (generated) by the detectable element(s) 114 is detected by the detector 116 while the wheel 108 rotates. The detectable signature is different, as detected by the detector 116, at each rotational position of the wheel 108.

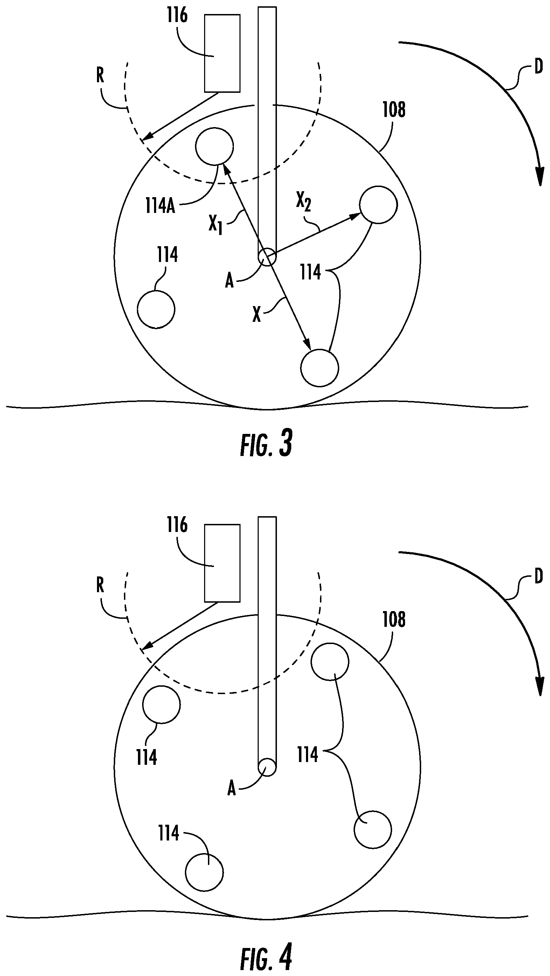

The detector 116 can detect a relative position of the front wheel 108 by detecting the presence and/or relative position of the detectable elements 114, 114A. For example, referring to FIGS. 3 and 4, the detector 116 can define a detection range R in which the detector 116 can detect the presence of detectable elements 114. As shown in FIG. 3, the detector 116 can detect the presence of one of the detectable elements 114A disposed within the detection range R while the other detectable elements 114 are not detected. As shown in FIG. 4, the detector 116 may detect the presence of no detectable elements 114 when the front wheel 118 is rotated to a position where the detectable elements 114 are all disposed outside of the detection range R. In yet other instances, the detector 116 may simultaneously detect a plurality of detectable elements 114 (e.g., by having a sufficient detection range R or the detectable elements 114 being positioned sufficiently close to one another).

In an embodiment, at least two of the detectable elements 114 can share a common characteristic. For example, the at least two detectable elements 114 can have the same relative electromagnetic properties as compared to one another. In a more particular embodiment, all of the detectable elements 114 can share the common characteristic. In this regard, the detector 116 may detect information that can be used only to determine the presence of a detectable element 114 within the detection range R, and not which detectable element 114 is disposed within the detection range R.

In another embodiment, at least two of the detectable elements 114 can have different characteristics as compared to one another. For example, the at least two detectable elements 114 can have different relative electromagnetic properties as compared to one another, different spatial arrangements relative to the wheel 108, such as different distances relative to a central axis A of the wheel 108, different sizes, or the like. The detector 116 may detect these different characteristics to allow the motion tracking system to differentiate between the detectable elements 114 disposed within the detection range R. Differentiation between the detectable elements 114 can allow the motion tracking system to determine additional motion-related characteristics related to the wheel 108, such as an exact angular orientation of the wheel 108.

During movement of the lawnmower 100, the front wheel 108 can rotate in a direction D about the central axis A. As the front wheel 108 rotates, the detector 116 detects the presence of the detectable elements 114 within the detection range R. For instance, by way of non-limiting example, if the lawnmower 100 travels at a speed where the front wheel 108 rotates twice per second and the front wheel 108 includes four equally spaced apart detectable elements 114 as illustrated, the detector 116 will detect eight passes of the detectable elements 114 within the detection radius R per second with each successive pass of the detectable element 114 interposed by a break without any detectable elements 114 within the detection radius R. As the front wheel 108 rotates, the detector 116 may also be configured to detect the relative distance between the detectable element 114 and the detector 116.

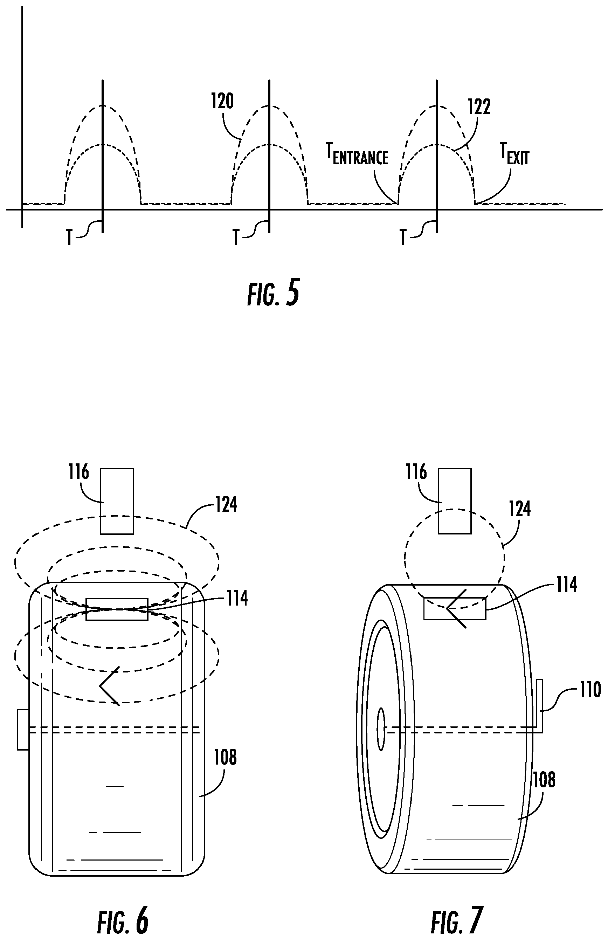

FIG. 5 illustrates a graph of a multi-dimensional detection signal as detected by the detector 116 as the wheel 108 is rotated about its central axis at a fixed rotational velocity in accordance with an example embodiment. The graph depicts flux (i.e., magnetic flux) along the Y-axis and time along the X-axis. The multi-dimensional detection signal includes two detection signals, a first detection signal 120 corresponding with displacement of the front wheel 108 about the rotational axis of the wheel relative to the bracket 110, and a second detection signal 122 corresponding with displacement of the front wheel 108 about the Z-axis (FIG. 1). Times when one of the detectable elements 114 is disposed at a central position within the detection range R of the detector 116 (i.e., when one of the detectable elements 114 is disposed in closest proximity to the detector 116) are shown by vertical lines T. At positions corresponding with times T, the detection signal is at a highest relative value. As the wheel is rotated at different rotational velocities, the distance between adjacent times T changes. For instance, as the wheel is rotated fastener, the distance between adjacent times T decreases. Conversely, as the wheel is rotated slower, the distance between adjacent times T increases.

In a non-illustrated embodiment, the detection signals 120 and 122 can have different profiles than the profiles shown in FIG. 5. For example, one or both of the detection signals 120 or 122 can have a non-curved, rectangular profile corresponding to detection of the detectable element 114 within the detection range R without consideration of relative position of the detectable element 114 within the detection range R. That is, the detection signal 120 or 122 can indicate that one of the detectable elements 114 is within the detection range R without providing details as to the exact location of that detectable element 114 within the detection range R. This may be referred to as binary detection (i.e., YES if there is a detectable element 114 in the detection range R and NO if there is no detectable element 114 in the detection range). Also, it is possible that time T can correspond with instances when no detectable element 114 is disposed at a central position within the detection range R of the detector 116 (i.e., at a closest position with respect to the detector 116). For example, where the detectable elements 114 are arranged close enough to one another, it is possible that two adjacent detectable elements 114 disposed near the central position of the detection range R will cause a greater flux reading at the detector 116 than a single detectable element 114 disposed at the central position.

FIG. 6 illustrates a schematic front view of the front wheel 108 as seen with a magnetic field 124 created by the detectable element 114. As depicted, the magnetic field 124 overlaps with the detector 116 when the front wheel 108 is disposed at one or more rotational positions where the detectable element 114 is disposed within the detection range R. The detector 116 can detect the magnetic field 124 of the front wheel 108 as it rotates and generate the first detection signal 120 shown in FIG. 5 in response thereto.

Referring again to FIG. 5, the value of flux in the detection signal 120 can initially indicate ingress (entrance) of the detectable element 114 into the detection range R at time T_{ENTRANCE}. The value of flux in the detection signal 120 can indicate egress (exit) of the detectable element 114 from the detection range R at time T_{EXIT}. As the front wheel 108 rotates between time T_{ENTRANCE} and T_{EXIT}, the flux detected by the detector 116 first increases until time T and then decreases to a minimal threshold, e.g., zero, at time T_{EXIT}. Thus, the exact position of the front wheel 108 can be determined between times T_{ENTRANCE} and T_{EXIT}. As the exact rotational position of the front wheel 108 may not be readily detectable when no detectable elements 114 are disposed in the detection range R, use of a plurality of detectable elements 114 can create finer granularity in the detectable position of the front wheel 108 as gaps between the detection signal can be reduced, or even eliminated, resulting in a more constant stream of flux being detected by the detector 116.

FIG. 7 illustrates a schematic view with the detector 116 at the same position as depicted in FIG. 6 but with the front wheel 108 rotated about the Z axis (FIG. 1). As depicted, the magnetic field 124, as detected by the detector 116, changes based on the angular orientation of the front wheel 108 about the Z axis. This change in orientation can be detected by the detector 116. The detector 116 can generate the second detection signal 122 illustrated in FIG. 5 in view of the detected rotation of the front wheel 108 about the Z axis. The second detection signal 122 is shown with peaks at times T lower than the peaks of the first detection signal 120. This can occur, for example, when the front wheel 108 is turned from a forward direction to a laterally offset direction, i.e., when the travel direction of the lawnmower 100 is changed. As the front wheel 108 turns through its rotational displacement from the forward direction, the resulting second detection signal 122 decreases. By measuring the flux of the second detection signal 122, the angular orientation of the front wheel 108 can be detected. For example, detected flux values can be compared to known flux values associated with different angular orientations of the front wheel 108 to determine angular orientation of the front wheel 108. The known flux values, or ranges associated with known flux values, can be stored in local memory, e.g., in a lookup table, accessible by a controller of the lawnmower 100. Each known flux value (or range) can include a corresponding datum associated with the rotational displacement of the wheel about the Z-axis.

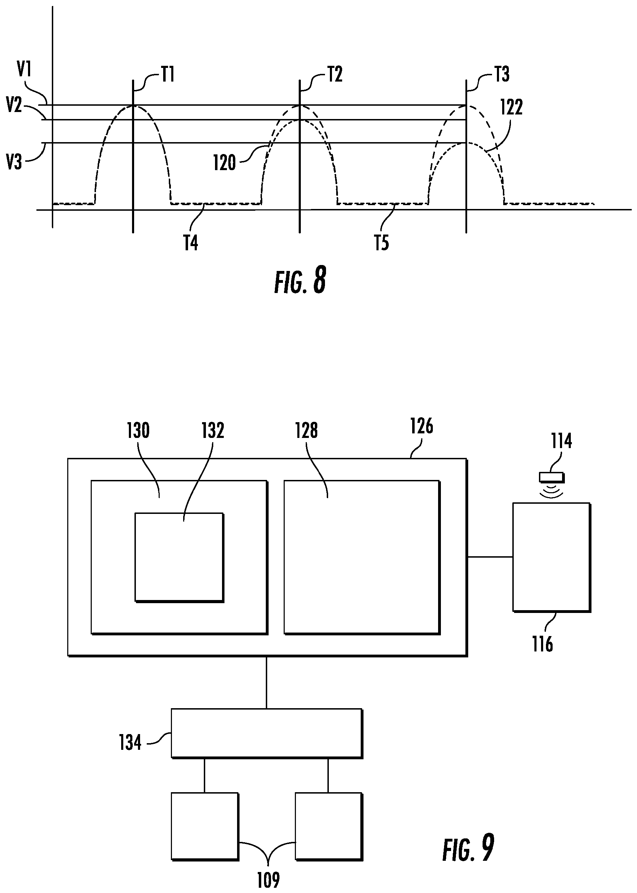

FIG. 8 illustrates a graph of a multi-dimensional detection signal from the detector 116 as seen over time in accordance with an exemplary embodiment. Similar to FIG. 5, the graph shows flux in the Y-axis and time in the X-axis. Three times T1, T2 and T3 are depicted with a detectable element 114 in the detection range R of the detector 116. These times T1, T2 and T3 are separated by times T4 and T5, respectively, where no detectable element 114 is disposed within the detection range R.

At time T1, the second detection signal 122 has a first flux value V1. At time T2, the second detection signal 122 has a second flux value V2. At time T3, the second detection signal 122 has a third flux value V3. The flux value of the second detection signal 122 decreases between T1 and T2 and further decreases between T2 and T3. This can be indicative of the front wheel 108 turning about the vertical axis between times T1 and T3. For example, at time T1, the front wheel 108 can face in a generally forward direction. In the forward direction, the front wheel 108 can generate a magnetic field 124 with a greatest detectable value as detected by the detector 116. Meanwhile at time T2, the front wheel 108 can be angularly offset from the forward direction by a first displacement. In this angularly displaced direction, the front wheel 108 can generate a lesser magnetic field 124, as detected by the detector 116. At time T3, the front wheel 108 can be angularly offset from the forward direction by a second displacement greater than the first displacement. In this further angularly displaced direction, the front wheel 108 can generate an even lesser magnetic field 124, as detected by the detector 116.

In an embodiment, at least one of the two front wheels 108 can be fixed, i.e., non-rotatable in the Z axis. In another embodiment, both of the two front wheels 108 can be fixed. During turning, the at least two front wheels 108 remain oriented in a fixed, i.e., constant, direction. It should be understood that for fixed, i.e., non-rotatable front wheel(s) 108, detection can occur in the rotational direction illustrated in FIG. 6. However, detection may not occur in the rotational direction illustrated in FIG. 7 as the non-rotatable front wheel(s) 108 remain fixed in the Z axis.

FIG. 9 illustrates a schematic of the motion control system in accordance with an embodiment. The motion control system can include a controller 126 that receives information from the detector 116, such as flux information associated with a detectable signal generated by the detectable element(s) 114. The controller 126 can include one or more processors 128 and a memory 130. The processor(s) 128 can be any suitable processing device (e.g., a control circuitry, a processor core, a microprocessor, an application specific integrated circuit, a field programmable gate array, a controller, a microcontroller, etc.) and can be one processor or a plurality of processors that are operatively connected. The memory 130 can include one or more non-transitory computer-readable storage media, such as RAM, ROM, EEPROM, EPROM, one or more memory devices, flash memory devices, etc., and combinations thereof. The memory 130 can store information that can be accessed by the processor(s) 128. For instance, the memory 130 (e.g., one or more non-transitory computer-readable storage mediums, memory devices) can include computer-readable instructions 132 that can be executed by the processor(s) 128. The instructions 132 can be software, firmware, or both written in any suitable programming language or can be implemented in firmware or hardware. Additionally, or alternatively, the instructions 132 can be executed in logically and/or virtually separate threads on processor(s) 128. For example, the memory 130 can store instructions 132 that when executed by the processor(s) 128 cause the processor(s) 128 to perform operations such as any of the operations and functions as described herein.

The controller 126 can analyze information received from the detector 116 to determine a current status of the detected wheel 108. For example, referring again to FIG. 8, the detector 116 can determine a relative position of the wheel 108 based on the amplitude of detected flux. The relative position can include a rotational position of the wheel 108 about the central axis and/or a rotational position of the wheel 108 about the Z axis.

Upon receiving the information from the detector 116, the controller 126 can compare the received information to stored information, e.g., a lookup table, to determine a correlation between the detected flux and a known rotational position of the wheel 108. In some implementations, the controller 126 can further compare the received information to expected information. The expected information may correspond to the expected values in response to instructions communicated to the motor controller 134.

The controller 126 may further determine a relative speed of the wheel 108. For example, the controller 126 can determine a time duration between T_{ENTRANCE} and T_{EXIT}, a time duration between T_{EXIT} and T_{ENTRANCE}, a time duration between T_{ENTRANCE} and a subsequently detected T_{ENTRANCE}, a time duration between T_{EXIT} and a subsequently detected T_{EXIT}, or the like. In some instances, the controller 126 may further determine acceleration of the wheel 108, for example, by analyzing the slope associated with the detected flux signal.

The controller 126 can communicate with a motor controller 134, e.g., directly or indirectly through another portion of the control circuitry of the lawnmower 100. The motor controller 134 can control, or at least partially control, the motor(s) 109. For example, the motor controller 134 can vary the level of power supplied to the motor(s) 109. In some embodiments, the motor controller 134 uses a Pulse Width Modulation (PWM) signal to control the motor(s) 109. For example, the motor controller 134 can use a PWM duty cycle to maintain a predetermined average voltage or a predetermined average power of the motor(s) 109. In an embodiment, the motor controller 134 can utilize proportional integral derivative (PID) controls, or the like, the control operation of the motor(s) 109.

In an embodiment, the motor controller 134 can include a plurality of motor controllers 134, such as a first motor controller and a second motor controller. The first motor controller can control operation of a motor 109 associated with a first driven wheel and the second motor controller can control operation of a motor 109 associated with a second driven wheel. In some instances, the first motor controller can provide instructions to the second motor controller. For example, the controller 126 can communicate instructions to the first motor controller which can relay information associated with the instructions to the second motor controller.

In an embodiment, the controller 126 can affect steering control in view of detected information received by the motion tracking system, e.g., by the detector 116. For instance, traction control can be implemented in view of the detected flux information received from the detector 116. The detected flux can be used to determine one or more aspects of motion, such as whether the lawnmower 100 is moving, stuck, or subject to another type of adverse event. Determining the one or more aspects of motion can include, for example, comparing received information from the detector 116 with expected information based on instructions provided to the motor controller 134. For example, where the controller 126 expects to be moving at a particular speed, e.g., 1 mile per hour (MPH), but analysis of the detected flux indicates movement is less than the particular speed, e.g., 0.25 MPH, the controller 126 can determine occurrence of an adverse event, such as slip. This may occur if the drive wheels are rotating to drive the lawnmower 100 to move at 1 MPH but the nondriven wheels (where the detectable elements 114 are located) are not moving at the 1 MPH expected speed. When this occurs, the controller 126 may provide alternate control instructions to the motor controller 134. By way of non-limiting example, the controller 126 may instruct the motor controller 134 to reduce speed of the motor(s) 109. Alternate control instructions, e.g., reducing operating speed of the motor(s) 109, may allow the controller 126 to gather additional information associated with the adverse event. Feedback in view of the additional information can be used by the controller 126 to assess the type and/or extent of the adverse event, e.g., to determine whether the adverse advent in associated with slipping of the wheels 108, damage to one or more components of the lawnmower 100, or the like. In certain instances, the wheels 108 may exhibit reduced slip when the speed of the lawnmower 100 is decreased. As such, the controller 126 can determine the adverse event as slippage when the difference between the expected speed and measured speed (by the detector 116) decreases as a result of reduce speed. Conversely, where the expected speed and measured speed remain different from one another at reduced speeds, the controller 126 can determine occurrence of damage to the lawnmower 100 or another related adverse event. The controller 126 can communicate the adverse event to a user device, e.g., a smart phone, through a communication interface (not illustrated), such as a wireless communicator. The user device can include a user interface, such as a screen, configured to display the adverse advent, or information associated therewith, to the user. The communication interface can include any circuits, components, software, etc. for communicating via one or more networks (e.g., a remote network). In some implementations, the communication interface can include for example, one or more of a communications controller, receiver, transceiver, transmitter, port, conductors, software and/or hardware for communicating data/information. In an embodiment, the communication interface can include a cellular antenna. In other embodiments, the communication interface can include a WiFi transmitter/receiver, a local area network (LAN) communication protocol, or another type of communication interface.

In some implementations, the controller 126 can use a machine learning computing system to determine conditions and characteristics associated with adverse events. The controller 126 can then operate while learning about the environment and the lawnmower 100 to inform better future control instructions. In an embodiment, the machine learning computing system can train one or more machine-learned models through use of a model trainer. The model trainer can train the machine-learned model(s) using one or more training or learning algorithms. One example training technique is backwards propagation of errors. In some implementations, the model trainer can perform supervised training techniques using a set of labeled training data. In other implementations, the model trainer can perform unsupervised training techniques using a set of unlabeled training data. By way of example, the model trainer can train a machine-learned adverse event parameter estimation model. The model trainer can perform a number of generalization techniques to improve the generalization capability of the models being trained. Generalization techniques include weight decays, dropouts, or other techniques.

Communication from the detector 116 to the controller 126 may occur at specific intervals (e.g., every 0.1 seconds, every second, every 2 seconds, etc.). Alternatively, communication from the detector 116 to the controller 126 may occur on an ongoing basis, e.g., continuously. Additionally, the lawnmower 100 may be usable with a dead-reckoning navigation system whereby the control circuitry detects a relative position of the lawnmower 100 based on information detected from relative movement of one or both of the front wheels 108, optionally further in view of information associated with the rear wheels 106. In embodiments where both front wheels 108 include the aforementioned detectable elements 114 and detector 116, individual analysis at each of the front wheels 108 is possible. Issues affecting only one of the front wheels 108 can then be more easily diagnosed and addressed.

The patentable scope of the invention is defined by the claims.

## Claims

1. A lawn maintenance device comprising:
a frame (102);
a wheel supporting the frame, wherein the wheel comprises:
a body (113) defining a central axis about which the body is rotatable; and
a detectable element (114) radially offset from the central axis;
a detector (116) that detects a relative position of the detectable element; and
control circuitry that receives information from the detector and determines a position of the wheel based on the received information, the information associated with the detected relative position of the detectable element;
wherein the determined position includes a rotational position of the body, as measured about the central axis, and an angular orientation of the body, as measured about a transverse axis normal to the central axis.

2. The lawn maintenance device of claim 1, wherein the detectable element comprises a plurality of detectable elements circumferentially spaced apart from one another about the central axis.

3. The lawn maintenance device of claim 1, wherein the detectable element comprises an elongated body having a length oriented parallel with the central axis.

4. The lawn maintenance device of claim 1, wherein the detectable element is fully disposed within the body.

5. The lawn maintenance device of claim 1, wherein the wheel is a first wheel, wherein the lawn maintenance device further comprises a second wheel, and wherein each of the first and second wheels is a caster wheel.

6. The lawn maintenance device of claim 1, wherein the detector is a multi-axis magnetometer, and wherein the detectable element comprises a magnetic composition.

7. The lawn maintenance device of claim 1, wherein the control circuitry is further configured to detect a speed of travel of the lawn maintenance device in response to the information.

8. The lawn maintenance device of claim 1, wherein the control circuity is further configured to detect a status of the lawn maintenance device in response to the information received from the detector, the status selected from a group consisting of stationary, travelling, stuck, and broken.

9. The lawn maintenance device of claim 1, wherein the lawn maintenance device further comprises a body coupled to the frame, and wherein the detector is disposed within a cavity of the body.

## Patentansprüche

1. Rasenpflegegerät, umfassend:
einen Rahmen (102);
ein den Rahmen tragendes Rad, wobei das Rad umfasst:
einen Körper (113), der eine Mittelachse definiert, um die der Körper drehbar ist; und
ein erfassbares Element (114), das radial von der Mittelachse versetzt ist;
einen Detektor (116), der eine relative Position des erfassbaren Elements erfasst; und
eine Steuerschaltung, die Informationen vom Detektor empfängt und auf der Grundlage der empfangenen Informationen eine Position des Rades ermittelt, wobei die Informationen mit der erfassten relativen Position des erfassbaren Elements in Zusammenhang stehen;
wobei die ermittelte Position eine Drehposition des Körpers, gemessen um die Mittelachse, und eine Winkelausrichtung des Körpers, gemessen um eine zu der Mittelachse normal verlaufende Querachse, umfasst.

2. Rasenpflegegerät nach Anspruch 1,
wobei das erfassbare Element eine Vielzahl von erfassbaren Elementen umfasst, die in Umfangsrichtung voneinander beabstandet um die Mittelachse angeordnet sind.

3. Rasenpflegegerät nach Anspruch 1,
wobei das erfassbare Element einen länglichen Körper mit einer Länge umfasst, die parallel zu der Mittelachse ausgerichtet ist.

4. Rasenpflegegerät nach Anspruch 1,
wobei das erfassbare Element vollständig innerhalb des Körpers angeordnet ist.

5. Rasenpflegegerät nach Anspruch 1,
wobei das Rad ein erstes Rad ist,
wobei das Rasenpflegegerät ferner ein zweites Rad umfasst und
wobei jedes aus erstem und zweitem Rad eine Lenkrolle ist.

6. Rasenpflegegerät nach Anspruch 1,
wobei der Detektor ein mehrachsiger Magnetometer ist und
wobei das erfassbare Element eine magnetische Zusammensetzung enthält.

7. Rasenpflegegerät nach Anspruch 1,
wobei die Steuerschaltung ferner dazu ausgelegt, als Reaktion auf die Informationen eine Fahrgeschwindigkeit des Rasenpflegegeräts zu erfassen.

8. Rasenpflegegerät nach Anspruch 1,
wobei die Steuerschaltung ferner dazu ausgelegt ist, als Reaktion auf die vom Detektor empfangenen Informationen einen Status des Rasenpflegegeräts zu erfassen, wobei der Status ausgewählt ist aus einer Gruppe bestehend aus stationär, fahrend, festgefahren und defekt.

9. Rasenpflegegerät nach Anspruch 1,
wobei das Rasenpflegegerät ferner einen mit dem Rahmen verbundenen Körper umfasst und
wobei der Detektor innerhalb eines Hohlraums des Körpers angeordnet ist.

## Revendications

1. Dispositif d'entretien du gazon comprenant :
un châssis (102) ;
une roue supportant le châssis, la roue comprenant :
un corps (113) définissant un axe central autour duquel le corps peut tourner ; et
un élément détectable (114) décalé radialement par rapport à l'axe central ;
un détecteur (116) qui détecte une position relative de l'élément détectable ; et
un circuit de commande qui reçoit des informations provenant du détecteur et qui détermine une position de la roue à l'aide des informations reçues, les informations étant associées à la position relative détectée de l'élément détectable ;
dans lequel la position déterminée comprend une position de rotation du corps, mesurée autour de l'axe central, et une orientation angulaire du corps, mesurée autour d'un axe transversal normal à l'axe central.

2. Dispositif d'entretien du gazon selon la revendication 1,
dans lequel l'élément détectable comprend une pluralité d'éléments détectables espacés circonférentiellement les uns des autres autour de l'axe central.

3. Dispositif d'entretien du gazon selon la revendication 1,
dans lequel l'élément détectable comprend un corps allongé ayant une longueur orientée parallèlement à l'axe central.

4. Dispositif d'entretien du gazon selon la revendication 1,
dans lequel l'élément détectable est entièrement disposé à l'intérieur du corps.

5. Dispositif d'entretien du gazon selon la revendication 1,
dans lequel la roue est une première roue,
le dispositif d'entretien du gazon comprend en outre une deuxième roue, et
chacune des première et deuxième roues est une roulette pivotante.

6. Dispositif d'entretien du gazon selon la revendication 1,
dans lequel le détecteur est un magnétomètre multiaxial, et
l'élément détectable comprend une composition magnétique.

7. Dispositif d'entretien du gazon selon la revendication 1,
dans lequel le circuit de commande est en outre configuré pour détecter une vitesse de déplacement du dispositif d'entretien du gazon en réponse aux informations.

8. Dispositif d'entretien du gazon selon la revendication 1,
dans lequel le circuit de commande est en outre configuré pour détecter un état du dispositif d'entretien du gazon en réponse aux informations reçues du détecteur, l'état étant sélectionné parmi un groupe comprenant les états stationnaire, en déplacement, bloqué et défectueux.

9. Dispositif d'entretien du gazon selon la revendication 1,
dans lequel le dispositif d'entretien du gazon comprend en outre un corps couplé au châssis, et
le détecteur est disposé à l'intérieur d'une cavité du corps.
